# EUROPEAN PATENT SPECIFICATION

(11) **EP 2 734 089 B1**
(45) Date of publication and mention of the grant of the patent: **09.09.2015**
(21) Application number: 12735842.2
(22) Date of filing: 10.07.2012
(51) Int. Cl.: A47J 27/09

(54) **SAFETY DEVICE AGAINST THE DANGER OF EXPLOSION, APPLICABLE TO LIDS OF PRESSURE COOKING APPARATUSES**
SICHERHEITSVORRICHTUNG ZUM SCHUTZ VOR EXPLOSIONSGEFAHR FÜR DECKEL VON SCHNELKOCHTÖPFEN
DISPOSITIF DE SÉCURITÉ ANTI-EXPLOSION, POUVANT ÊTRE UTILISÉ AVEC DES COUVERCLES D'APPAREILS DE CUISSON SOUS PRESSION

(30) Priority: 21.07.2011 IT MI20111360
(43) Date of publication of application: 28.05.2014
(73) Proprietor: Aracaria B.V., 1013 BX Amsterdam (NL)
(72) Inventor: LUKAC, Milan, 20861 Brugherio (IT)
(74) Representative: Viering, Jentschura & Partner Patent- und Rechtsanwälte
(86) International application number: PCT/EP2012/063462
(87) International publication number: WO 2013/010849

(56) References cited:
- EP-A1- 1 552 776
- EP-A2- 0 008 465
- DE-A1- 2 440 157
- DE-A1-102007 056 716
- US-A- 2 670 755

## Description

The invention relates to a safety device according to the preamble of claim 1. Accordingly, the present invention relates to a safety device against the danger of explosion, applicable to lids of pressure cooking apparatuses.

A safety device of the initially mentioned type is known, e.g., from US 2 670 755 A.

Pressure cooking apparatuses are known which make it possible to cook food at a pressure that is higher than atmospheric pressure. Such apparatuses, commonly called "pressure cookers", generally comprise a vessel which is open upward, of the pot or pan type or the like, a lid, which can be engaged with the mouth of the vessel in order to close it, and an annular gasket, which is associated with the lower rim of the lid and can be engaged with the internal lateral surface of the vessel proximate to its mouth in order to provide steam tightness between the vessel and the lid.

A pressure cooking apparatus of this type is disclosed, for example, in EP-568.531.

One of the main problems linked to the use of pressure cooking apparatuses is achieving adequate safety against the danger of explosion due to overpressure, which can occur due to an operating anomaly.

In these types of apparatus, in fact, cooking is adjusted with a temperature indicator and a device for controlling the pressure on the lid, which connects the inside of the vessel with the outside. This control device is generally constituted by a pin which can move in relation to the lid due to the action of the pressure of the steam that develops inside the vessel during cooking, along a vertical direction, in contrast with the action of a spring. Once the cooking pressure preset by the manufacturer is reached, this pressure is able to open the device in contrast with the action of the spring, making the steam exit through the device arranged on the lid, the steam giving the user a visual signal that the preset pressure has been reached in order to lead him/her to reduce to the minimum level the heat source used for cooking.

If the control device is not maintained adequately before cooking, for example in the case of inadequate or incorrect washing, the pin may remain stuck.

In order to prevent the pressure inside the vessel from increasing progressively until it causes the explosion of the vessel, with serious danger for the safety of the user, these apparatuses are provided with a safety device, also arranged on the lid, which opens at a pressure which is higher than the opening pressure of the control device but still substantially lower than the bursting pressure of the vessel.

Even the safety device, for reasons similar to the ones mentioned with reference to the control device, might fail to open, with the risk of causing the explosion of the vessel.

Moreover, in many cases the safety device, once it has performed its function, has to be replaced or in any case requires the intervention of specialized personnel in order to restore its efficiency.

The aim of the present invention is to solve the above mentioned problems, by providing a safety device against the danger of explosion, applicable to lids of pressure cooking apparatuses, that offers adequate assurances against the danger of explosion due to overpressure.

Within this aim, an object of the invention is to provide a safety device the efficiency of which can be restored simply and quickly without requiring necessarily the intervention of specialized personnel.

Another object of the invention is to provide a safety device that offers adequate assurances against the danger of accidental explosion even without requiring particular care from the user in apparatus maintenance operations.

A further object of the invention is to provide a cooking apparatus that can be manufactured with competitive costs.

Another object of the invention is to provide a safety device that protects the user against accidental burns.

This aim and these and other objects that will become better apparent hereinafter are achieved by a safety device according to claim 1. Further embodiment of the invention are described in the dependent claims.

Further characteristics and advantages of the invention will become better apparent from the description of a preferred but not exclusive embodiment of the safety device according to the invention, illustrated by way of non-limiting example in the accompanying drawings, wherein:
Figure 1 is a sectional view of the safety device according to the invention applied to the lid of a pressure cooking apparatus, taken along a plane that passes through the axis of the lid and through the safety device according to the invention;
Figure 2 is an enlarged- scale view of a detail of Figure 1, illustrating the operation of the safety device in the operating conditions of the cooking apparatus at the working pressure;
Figure 3 is a view of the same detail as Figure 2, illustrating the behavior of the flow control element in case of overpressure inside the cooking apparatus;

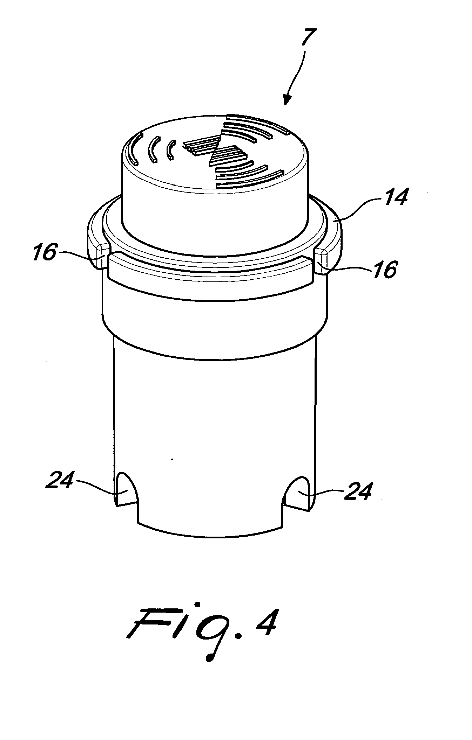

Figure 4 is a perspective view of the flow control element of the safety device according to the invention.

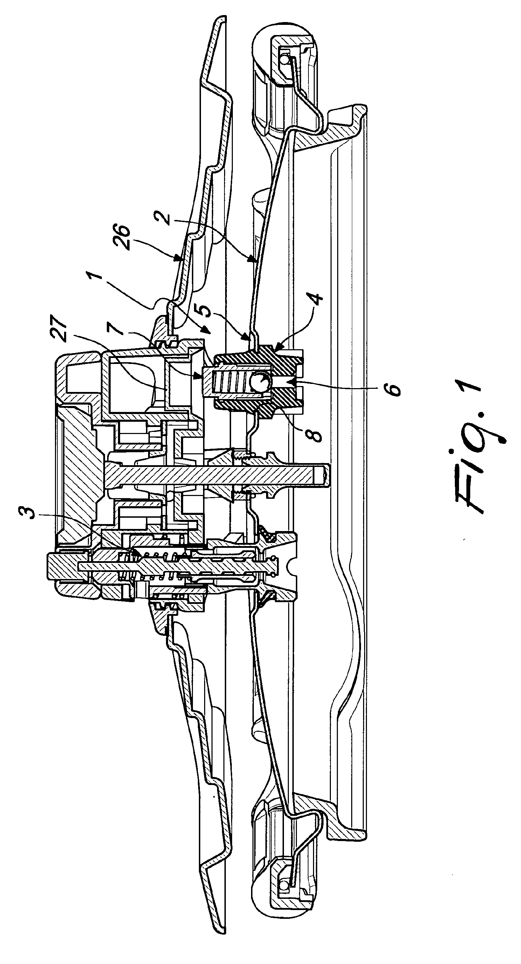

With reference to the figures, the safety device according to the invention, generally designated by the reference numeral 1, is designed to be applied to a lid 2 of pressure cooking apparatuses, preferably in addition to a cooking pressure control device 3, which can be constituted by a valve, of a known type, for example of the type shown in Figure 1, which is not described further for the sake of simplicity.

The safety device 1 comprises a valve body 4, which is provided with means 5 for engagement with the lid 2 of the pressure cooking apparatus. The valve body 4 is crossed by a passage 6 for the steam generated by the pressure cooking apparatus.

The safety device 1 also comprises a flow control element 7, which is arranged along the passage 6 and is associated detachably with the valve body 4.

The flow control element 7 is disengageable from the valve body 4 and able to protrude at least partially out of the valve body 4 in order to clear the passage 6 by exceeding, on the part of the steam that is generated by the pressure cooking apparatus and enters the passage 6, a preset pressure that is higher than the working pressure of the pressure cooking apparatus.

More specifically, the valve body 4 preferably has a substantially cylindrical shape and is made of elastically deformable material, such as for example silicone rubber.

The valve body 4 is insertable coaxially in a hole 8 that passes through the lid 2 of the cooking apparatus and the engagement means 5 comprise an external circumferential slot 9, which is defined on the outer lateral surface of the valve body 4 and is engageable by the rim of the hole 8.

In greater detail, the valve body 4, starting from the external circumferential slot 9 in the direction of its axial end designed to be directed toward the outside of the lid 2, tapers slightly, and between such slightly tapered portion 10 and the external circumferential slot 9 a conical rim 11 is provided. The opposite side with respect to the external circumferential slot 9 is delimited by a flange 12, which defines a shoulder 13 for the internal side of the lid 2. In practice, the valve body 4 can be engaged with the lid 2 simply by inserting its slightly tapered portion 10 through the hole 8 starting from the internal side of the lid 2 and pushing it outward until the external circumferential slot 9, by utilizing the possibility of elastic deformation of the material of which the valve body 4 is made, reaches the hole 8. The conical rim 11 is able to pass through the hole 8 by contracting radially, again due to the elastic deformability of the material of which the valve body 4 is made, and once the hole 8 has been passed it expands radially, by elastic reaction, retaining the lid 2 inside the external circumferential slot 9 between the conical rim 11 and the flange 12.

The passage 6 crosses axially the valve body 4, and the flow control element 7, which is substantially cylindrical, is accommodated coaxially in the passage 6.

The flow control element 7 has, on its lateral surface, a flange 14 which engages detachably an internal circumferential slot 15 defined in the side walls of the passage 6. The internal circumferential slot 15 is defined proximate to the axial end of the valve body 4 that is designed to be directed toward the outside of the cooking apparatus. The flange 14 is disengageable from the internal circumferential slot 15 due to the outward radial elastic deformation of the valve body 4 when, in the passage 6, a preset pressure higher than the working pressure of the pressure cooking apparatus is exceeded.

Conveniently, the flange 14 of the flow control element 7 has, along its extension, recesses 16 to allow the flow of the steam that enters the passage 6.

More specifically, the passage 6 comprises, starting from the axial end of the valve body 4 that is designed to be directed toward the inside of the cooking apparatus, a first portion 17 and a second portion 18, which are mutually coaxial. The second portion 18 has a larger diameter than the first portion 17, so that between the first portion 17 and the second portion 18 a resting surface 19 is provided, which is substantially at right angles to the axis 20 of the valve body 4. The second portion 18 accommodates the flow control element 7, which, when correctly engaged by means of its flange 14 inside the internal circumferential slot 15, rests with an axial end against the resting surface 19.

In the flow control element 7 an axial cavity 21 is provided, which is substantially cylindrical and is open at its axial end directed toward the outlet of the first portion 17 of the passage 6. The axial cavity 21 is closed at its opposite axial end. The axial cavity 21 accommodates a closure element 22, which is constituted preferably by a ball and is pushed against the outlet of the first portion 17 of the passage 6 by an elastic element 23, for example a helical spring, which is interposed between the closed axial end of the axial cavity 21 and the closure element 22. The flow control element 7 is engageable, by means of its flange 14, with the internal circumferential slot 15 of the valve body 4, applying an axial action which is oriented toward the end of the valve body 4 that is designed to be directed toward the inside of the cooking apparatus. Essentially, in order to engage the flow control element 7 with the valve body 4 it is sufficient to insert it partially inside the second portion 18 of the passage 6 and press it toward the inside of the valve body 4 until, as a consequence of the radial elastic deformation of the valve body 4 and of the subsequent return by elastic reaction, the flange 14 of the flow control element 7 engages inside the internal circumferential slot 15.

The axial end of the flow control element 7 designed to rest against the resting surface 19 has connecting passages 24 which have the function of connecting the first portion 17 of the passage 6 to an interspace 25, which when the flow control element 7 is correctly coupled to the valve body 4 is defined between the side walls of the second portion 18 of the passage 6 and the external lateral surface of the flow control element 7.

Advantageously, the safety device 1 according to the invention is arranged below a cross-member 27, associated with the lid 2, which limits the outward protrusion of the flow control element 7 when it is disengaged from the valve body 4, due to the exceeding of a preset pressure inside the pressure cooking apparatus. The same cross-member 27 acts as a support for a covering element 26, which is applicable to the lid 2 of the cooking apparatus above the valve body 4 so that the covering element 26 limits the expansion of hot steam into the environment when the flow control element 7 is disengaged from the valve body 4, due to the exceeding of a preset pressure inside the pressure cooking apparatus.

Operation of the safety device 1 according to the invention is as follows.

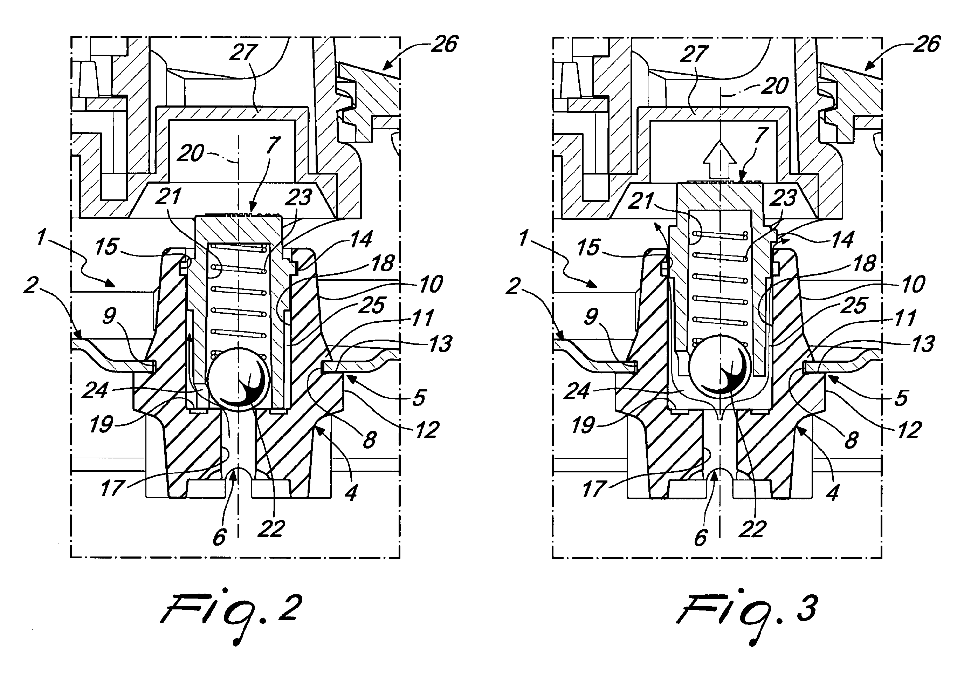

When the pressure, adjusted by the control device 3, increases inside the pressure cooking apparatus and remains at the values expected during design, i.e., remains below a maximum value set by safety standards, the closure element 22 detaches only slightly from the outlet of the first portion 17 of the passage 6 and a reduced amount of steam flows through the connecting passages 24, in the interspace 25 and from there flows outside through the recesses 16 of the flange 14 of the flow control element 7, as shown in Figure 2, and does not allow the generation of a pressure inside the interspace 25 that might return the closure element 22 into contact with the outlet of the first portion 17, closing the passage 6 again.

In this manner, no counterpressure is formed on the closure element 22, which does not close. If the recesses 16 were not present, a small increase in pressure would be sufficient to compress the closing spring 23. In this manner there would be a continuous oscillation of the closure element 22, with a dangerous increase in the pressure in the vessel, without the safety device 1 opening.

When, following a malfunction of the control device 3, the pressure inside the cooking apparatus exceeds the nominal value preset by the safety standards, the closure element 22, by overcoming the elastic reaction of the spring 23, disengages further from the outlet of the first portion 17 of the passage 6, causing the inflow, inside the second portion 18 of the passage 6, of a greater quantity of steam. The greater flow of steam causes the expansion of the valve body 4, which disengages the flange 14 of the flow control element 7 from its internal circumferential slot 15, making the flow control element 7 protrude outward and therefore clearing the passage 6 substantially completely, as shown in Figure 3. Due to the opening of the passage 6, the pressure inside the cooking apparatus decreases rapidly to atmospheric pressure in a few seconds, avoiding the danger of an explosion of the cooking apparatus.

The safety device 1 according to the invention, after intervening, i.e., after the flow control element 7 has disengaged from the valve body 4, can be used again, i.e., "reset", simply by pushing again the flow control element 7 inside the second portion 18 of the passage 6 of the valve body 4 until the flange 14 of the flow control element 7 engages the internal circumferential slot 15 of the valve body 4. Every time the flow control element 7 disengages, the pressure inside the cooking apparatus drops to atmospheric pressure, after which the control device 3 must be necessarily cleaned and checked.

It should be noted that when the flow control element 7 protrudes outside the valve body 4 the cross-member 27 and the covering element 26 prevent the steam that exits from the passage 6 from striking the user and prevent the flow control element 7 from being propelled against any people who might be in the vicinity of the cooking apparatus. Moreover, the covering element 26 keeps the flow control element 7 proximate to the valve body 4, making the "reset" operation easier.

In practice it has been found that the safety device according to the invention fully achieves the intended aim, since it ensures a high reliability of intervention and, once it has intervened, must be restored, but in an extremely easy manner, even by non-specialized personnel, such as the user. The need to restore the safety device 1 is an important safety aid, because it forces to verify and fix the control device, the malfunction of which causes the activation of the safety device.

The safety device thus conceived is susceptible of numerous modifications and variations, all of which are within the scope of the appended claims. All the details may further be replaced with other technically equivalent elements.

In practice, the materials used, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A safety device (1) against the danger of explosion, applicable to lids of pressure cooking apparatuses, comprising:
- a valve body (4) provided with means (5) for engagement with the lid (2) of the pressure cooking apparatus and crossed by a passage (6) for the steam generated by the pressure cooking apparatus;
- a flow control element (7), which is arranged along said passage (6) and is associated detachably with said valve body (4);
said flow control element (7) being disengageable from said valve body (4) and able to protrude at least partially out of said valve body (4) in order to clear said passage (6) by exceeding, on the part of the steam that is generated by the pressure cooking apparatus and enters said passage (6), a preset pressure that is higher than the working pressure of the pressure cooking apparatus, **characterized in that**
in said flow control element (7) an axial cavity (21) is provided, which is open toward the outlet of a first portion (17) of the passage (6); said axial cavity (21) accommodates a closure element (22), which is pushed against the outlet of said first portion (17) by an elastic element (23) which is interposed between said flow control element (7) and said closure element (22).

2. The safety device (1) according to claim 1, **characterized in that** said valve body (4) is substantially cylindrical and is made of elastically deformable material; said valve body (4) being insertable coaxially in a hole (8) that passes through the lid (2) of the cooking apparatus and said engagement means (5) comprising an external circumferential slot (9), which is defined on the outer lateral surface of said valve body (4) and is engageable by the rim of said hole (8).

3. The safety device (1) according to claims 1 and 2, **characterized in that** said valve body (4) is crossed axially by said passage (6), said flow control element (7) being substantially cylindrical and being accommodated coaxially in said passage (6).

4. The safety device (1) according to one or more of the preceding claims, **characterized in that** said flow control element (7) has, on its lateral surface, a flange (14) that engages detachably an internal circumferential slot (15) defined in the side walls of said passage (6); said internal circumferential slot (15) being defined proximate to the axial end of said valve body (4) that is designed to be directed toward the outside of the cooking apparatus; said flange (14) being disengageable from said internal circumferential slot (15) by the outward radial elastic deformation of said valve body (4) when a preset pressure, higher than the working pressure of the pressure cooking apparatus, is exceeded in said passage (6).

5. The safety device (1) according to one or more of the preceding claims, **characterized in that** said flange (14) has, along its extension, recesses (16) for the passage of the steam that enters said passage (6).

6. The safety device (1) according to one or more of the preceding claims, **characterized in that** said passage (6) comprises, starting from the end of said valve body (4) to be directed toward the inside of the cooking apparatus, a first portion (17) and a second portion (18) which are mutually coaxial; said second portion (18) having a larger diameter than said first portion (17); said second portion (18) accommodating said flow control element (7).

7. The safety device (1) according to one or more of the preceding claims, **characterized in that** said closure element (22) is ball-shaped.

8. The safety device (1) according to one or more of the preceding claims, **characterized in that** said flow control element (7) is engageable by said flange (14) with said internal circumferential slot (15) of the valve body (4) by an axial action which is oriented toward the end of said valve body (4) that is designed to be directed toward the inside of the cooking apparatus.

9. The safety device (1) according to one or more of the preceding claims, **characterized in that** said flow control element (7) has an axial end that rests on the end of said second portion (18) of the passage (6) that is adjacent to said first portion (17) of the passage (6); passages (24) being defined on said axial end of the flow control element (7) for connecting said axial cavity (21) to an interspace (25) defined between the side walls of said second portion (18) of the passage (6) and said flow control element (7).

10. The safety device (1) according to one or more of the preceding claims, **characterized in that** above said flow control element (7) a cross- member (27) is provided, which is associated with the lid (2) of the cooking apparatus and is adapted to limit the outward protrusion of said flow control element (7) upon its disengagement from said valve body (4).

11. The safety device (1) according to one or more of the preceding claims, **characterized in that** it comprises a covering element (26), which is applicable to the lid (2) of the cooking apparatus above said valve body (4) to shield the jet of steam emitted through said passage (6).

## Patentansprüche

1. Sicherheitsvorrichtung (1) gegen die Explosionsgefahr, anwendbar bei Deckeln von Druckkochvorrichtungen, aufweisend:
- einen Ventilkörper (4), der mit Mitteln (5) für den Eingriff mit dem Deckel (2) der Druckkochvorrichtung vorgesehen ist und von einer Passage (6) für den von der Druckkochvorrichtung erzeugten Dampf durchquert wird;
- ein Strömungssteuerelement (7), welches entlang der Passage (6) angeordnet ist und mit dem Ventilkörper (4) lösbar verbunden ist;
wobei das Strömungssteuerelement (7) von dem Ventilkörper (4) trennbar ist und geeignet ist, wenigstens teilweise aus dem Ventilkörper (4) herauszuragen, um durch Überschreiten eines seitens des Dampfes, der von der Druckkochvorrichtung erzeugt wird und in die Passage (6) eintritt, vorbestimmten Druckes, der höher als der Arbeitsdruck der Druckkochvorrichtung ist, die Passage (6) freizugeben,
**dadurch gekennzeichnet, dass**
in dem Strömungssteuerelement (7) eine axiale Aushöhlung (21) vorgesehen ist, welche in Richtung zu dem Auslass eines ersten Abschnitts (17) der Passage (6) offen ist, wobei die axiale Aushöhlung (21) ein Verschlusselement (22) aufnimmt, welches mittels eines Federelements (23), welches zwischen dem Strömungssteuerelement (7) und dem Verschlusselement (22) angeordnet ist, gegen den Auslass des ersten Abschnitts (17) gedrückt wird.

2. Sicherheitsvorrichtung (1) nach Anspruch 1, **dadurch gekennzeichnet, dass** der Ventilkörper (4) im Wesentlichen zylindrisch ist und aus elastisch verformbarem Material hergestellt ist, wobei der Ventilkörper (4) in eine Öffnung (8) koaxial einsetzbar ist, die durch den Deckel (2) der Kochvorrichtung hindurchtritt, und die Eingriffsmittel (5) einen Außenumfangsschlitz (9) aufweisen, welcher an der äußeren Seitenfläche des Ventilkörpers (4) definiert ist und mit dem Rand der Öffnung (8) in Eingriff bringbar ist.

3. Sicherheitsvorrichtung (1) nach den Ansprüchen 1 und 2, **dadurch gekennzeichnet, dass** der Ventilkörper (4) von der Passage (6) axial durchquert wird, wobei das Strömungssteuerelement (7) im Wesentlichen zylindrisch ist und in der Passage (6) koaxial aufgenommen ist.

4. Sicherheitsvorrichtung (1) nach einem oder mehreren der vorhergehenden Ansprüche, **dadurch gekennzeichnet, dass** das Strömungssteuerelement (7) an seiner Seitenfläche einen Flansch (14) aufweist, der mit einem Innenumfangsschlitz (15) im Eingriff steht, der in den Seitenwänden der Passage (6) definiert ist, wobei der Innenumfangsschlitz (15) zu dem axialen Ende des Ventilkörpers (4), das derart gestaltet ist, dass es in Richtung zu der Außenseite der Kochvorrichtung ausgerichtet ist, nächstgelegen definiert ist, wobei der Flansch (14) durch die nach außen radiale, elastische Verformung des Ventilkörpers (4) von dem Innenumfangsschlitz (15) trennbar ist, wenn ein vorbestimmter Druck, der höher als der Arbeitsdruck der Druckkochvorrichtung ist, in der Passage (6) überschritten ist.

5. Sicherheitsvorrichtung (1) nach einem oder mehreren der vorhergehenden Ansprüche, **dadurch gekennzeichnet, dass** der Flansch (14) entlang seiner Erstreckung Ausnehmungen (16) für den Durchtritt des Dampfes, der in die Passage (6) eintritt, aufweist.

6. Sicherheitsvorrichtung (1) nach einem oder mehreren der vorhergehenden Ansprüche, **dadurch gekennzeichnet, dass** die Passage (6) ausgehend von dem Ende des Ventilkörpers (4), das in Richtung zu der Innenseite der Kochvorrichtung ausgerichtet ist, einen ersten Abschnitt (17) und einen zweiten Abschnitt (18) aufweist, welche koaxial zueinander sind, wobei der zweite Abschnitt (18) einen größeren Durchmesser als der erste Abschnitt (17) hat, wobei der zweite Abschnitt (18) das Strömungssteuerelement (7) aufnimmt.

7. Sicherheitsvorrichtung (1) nach einem oder mehreren der vorhergehenden Ansprüche, **dadurch gekennzeichnet, dass** das Verschlusselement (22) kugelförmig ist.

8. Sicherheitsvorrichtung (1) nach einem oder mehreren der vorhergehenden Ansprüche, **dadurch gekennzeichnet, dass** das Strömungssteuerelement (7) durch eine axiale Bewegung, welche in Richtung zu dem Ende des Ventilkörpers (4), das derart gestaltet ist, dass es in Richtung zu der Innenseite der Kochvorrichtung ausgerichtet ist, orientiert ist, über den Flansch (14) mit dem Innenumfangsschlitz (15) in Eingriff bringbar ist.

9. Sicherheitsvorrichtung (1) nach einem oder mehreren der vorhergehenden Ansprüche, **dadurch gekennzeichnet, dass** das Strömungssteuerelement (7) ein axiales Ende hat, das an dem Ende des zweiten Abschnitts (18) der Passage (6), das zu dem ersten Abschnitt (17) der Passage (6) benachbart ist, anliegt, wobei Durchgänge (24) an dem axialen Ende des Strömungssteuerelements (7) zum Verbinden der axialen Aushöhlung (21) mit einem Zwischenraum (25), der zwischen den Seitenwänden des zweiten Abschnitts (18) der Passage (6) und dem Strömungssteuerelement (7) definiert ist, ausgebildet sind.

10. Sicherheitsvorrichtung (1) nach einem oder mehreren der vorhergehenden Ansprüche, **dadurch gekennzeichnet, dass** über dem Strömungssteuerelement (7) ein Gegenelement (27) vorgesehen ist, welches dem Deckel (2) der Kochvorrichtung zugeordnet ist und geeignet ist, den äußeren Vorsprung des Strömungssteuerelements (7) bei seiner Trennung von dem Ventilkörper (4) zu begrenzen.

11. Sicherheitsvorrichtung (1) nach einem oder mehreren der vorhergehenden Ansprüche, **dadurch gekennzeichnet, dass** sie ein Abdeckelement (26) aufweist, welches bei dem Deckel (2) der Kochvorrichtung über dem Ventilkörper (4) anwendbar ist, um den Dampfstrahl, der durch die Passage (6) hindurch ausgestoßen wird, abzuschirmen.

## Revendications

1. Dispositif de sécurité (1) contre le risque d'explosion, applicable aux couvercles d'appareils de cuisson sous pression, comprenant :
- un corps de soupape (4) prévu avec des moyens (5) pour la mise en prise avec le couvercle (2) de l'appareil de cuisson sous pression et traversé par un passage (6) pour la vapeur générée par l'appareil de cuisson sous pression ;
- un élément de régulation de débit (7) qui est agencé le long dudit passage (6) et est associé, de manière détachable, audit corps de soupape (4) ;
ledit élément de régulation de débit (7) pouvant être dégagé dudit corps de soupape (4) et pouvant faire saillie au moins partiellement à l'extérieur dudit corps de soupape (4) afin de dégager ledit passage (6) en dépassant, sur la partie de la vapeur qui est générée par l'appareil de cuisson sous pression et entre dans ledit passage (6), une pression prédéfinie qui est supérieure à la pression de travail de l'appareil de cuisson sous pression, **caractérisé en ce que** dans ledit élément de régulation de débit (7), on prévoit une cavité axiale (21) qui est ouverte vers la sortie d'une première partie (17) du passage (6) ; ladite cavité axiale (21) loge un élément de fermeture (22) qui est poussé contre la sortie de ladite première partie (17) par un élément élastique (23) qui est intercalé entre ledit élément de régulation de débit (7) et ledit élément de fermeture (22).

2. Dispositif de sécurité (1) selon la revendication 1, **caractérisé en ce que** ledit corps de soupape (4) est sensiblement cylindrique et est réalisé avec un matériau élastiquement déformabie ; ledit corps de soupape (4) pouvant être inséré de manière coaxiale dans un trou (8) qui traverse le couvercle (2) de l'appareil de cuisson et lesdits moyens de mise en prise (5) comprenant une fente circonférentielle externe (9) qui est définie sur la surface latérale externe dudit corps de soupape (4) et pouvant être mise en prise par le bord dudit trou (8).

3. Dispositif de sécurité (1) selon les revendications 1 et 2, **caractérisé en ce que** ledit corps de soupape (4) est traversé axialement par ledit passage (6), ledit élément de régulation de débit (7) étant sensiblement cylindrique et étant logé, de manière coaxiale, dans ledit passage (6).

4. Dispositif de sécurité (1) selon une ou plusieurs des revendications précédentes, **caractérisé en ce que** ledit élément de régulation de débit (7) a, sur sa surface latérale, une bride (14) qui met en prise, de manière détachable, une fente circonférentielle interne (15) définie dans les parois latérales dudit passage (6) ; ladite fente circonférentielle interne (15) étant définie à proximité de l'extrémité axiale dudit corps de soupape (4) qui est conçue pour être dirigée vers l'extérieur de l'appareil de cuisson ; ladite bride (14) pouvant être dégagée de ladite fente circonférentielle interne (15) par la déformation élastique radiale vers l'extérieur dudit corps de soupape (4) lorsqu'une pression prédéfinie, supérieure à la pression de travail de l'appareil de cuisson sous pression, est dépassée dans ledit passage (6).

5. Dispositif de sécurité (1) selon une ou plusieurs des revendications précédentes, **caractérisé en ce que** ladite bride (14) a, le long de son extension, des évidements (16) pour le passage de la vapeur qui pénètre dans ledit passage (6).

6. Dispositif de sécurité (1) selon une ou plusieurs des revendications précédentes, **caractérisé en ce que** ledit passage (6) comprend, à partir de l'extrémité dudit corps de soupape (4) à diriger vers l'intérieur de l'appareil de cuisson, une première partie (17) et une seconde partie (18) qui sont mutuellement coaxiales ; ladite seconde partie (18) ayant un plus grand diamètre que ladite première partie (17) ; ladite seconde partie (18) logeant ledit élément de régulation de débit (7).

7. Dispositif de sécurité (1) selon une ou plusieurs des revendications précédentes, **caractérisé en ce que** ledit élément de fermeture (22) est sphérique.

8. Dispositif de sécurité (1) selon une ou plusieurs des revendications précédentes, **caractérisé en ce que** ledit élément de régulation de débit (7) peut être mis en prise par ladite bride (14) avec ladite fente circonférentielle interne (15) du corps de soupape (4) par une action axiale qui est orientée vers l'extrémité dudit corps de soupape (4) qui est conçue pour être dirigée vers l'intérieur de l'appareil de cuisson.

9. Dispositif de sécurité (1) selon une ou plusieurs des revendications précédentes, **caractérisé en ce que** ledit élément de régulation de débit (7) a une extrémité axiale qui s'appuie sur l'extrémité de ladite seconde partie (18) du passage (6) qui est adjacente à ladite première partie (17) du passage (6); les passages (24) étant définis sur ladite extrémité axiale de l'élément de régulation de débit (7) pour raccorder ladite cavité axiale (21) à un espace intermédiaire (25) défini entre les parois latérales de ladite seconde partie (18) du passage (6) et ledit élément de régulation de débit (7).

10. Dispositif de sécurité (1) selon une ou plusieurs des revendications précédentes, **caractérisé en ce que**, au-dessus dudit élément de régulation de débit (7), on prévoit une traverse (27) qui est associée au couvercle (2) de l'appareil de cuisson et est adaptée pour limiter la saillie vers l'extérieur dudit élément de régulation de débit (7) suite à son dégagement dudit corps de soupape (4).

11. Dispositif de sécurité (1) selon une ou plusieurs des revendications précédentes, **caractérisé en ce qu'**il comprend un élément de recouvrement (26) qui peut être appliqué sur le couvercle (2) de l'appareil de cuisson au-dessus dudit corps de soupape (4) pour protéger contre le jet de vapeur émis par ledit passage (6).
